# EUROPEAN PATENT SPECIFICATION

(11) **EP 2 851 552 B1**
(45) Date of publication and mention of the grant of the patent: **01.03.2017**
(21) Application number: 13185035.6
(22) Date of filing: 18.09.2013
(51) Int. Cl.: F02M 55/02, F02M 63/02, F02M 61/14, F16B 41/00, F16B 5/02

(54) **Fastening assembly for a fuel rail of a combustion engine**
Befestigungsanordnung für eine Kraftstoffleiste eines Verbrennungsmotors
Ensemble de fixation pour rail de carburant d'un moteur à combustion

(43) Date of publication of application: 25.03.2015
(73) Proprietor: Continental Automotive GmbH, 30165 Hannover (DE)
(72) Inventor: Pasquali, Marco, 57128 Livorno (IT); Serra, Giandomenico, 56010 Loc.Ghezzano - S.Giuliano Terme (PI) (IT)

(56) References cited:
- DE-A1-102009 016 633
- US-A1- 2011 073 074
- US-B1- 7 143 749

## Description

The invention relates to a fastening assembly for a fuel rail in an engine comprising a bracket and a bolt wherein the bracket is coupled to the fuel rail.

Document US 7,143,749 B1 discloses a method of securing a fuel rail to a cylinder head of an engine. Bolts pass through openings in brackets to secure the fuel rail to the cylinder head.

The delivery and assembly of a fuel rail in an engine environment is often associated with particular customer requirements regarding the position of the bolts used to affix the fuel rail to the cylinder head. In order to avoid any possible collisions and subsequent damage during the insertion of the fuel rail into its assembly position, it is often required by the customer that the bolts be in an upper position where only the bolt dog end (i.e. the tapered end portion of the bolt opposite to the bolt head where no threading is present) protrudes from the bottom surface of the bracket. This request is often presented together with the request to include a capture function in the fuel rail clamping bolt (i.e. a function to ensure that the bolt does not become detached during transportation or assembly).

These special customer requirements must be combined with the general requirement to enable sufficient radial and lateral tolerance during assembly. This is very important to avoid forcing and deforming of components which creates mounting stress and reduces the lifetime of the system.

The object of the invention is to disclose a fastening assembly for a fuel rail in a combustion engine which can facilitate reliable delivery and assembly of a fuel rail.

The object is achieved by a fastening assembly with the features of the independent claim. Advantageous embodiments of the invention are given in the sub-claims.

A fastening assembly for mounting a fuel rail in an engine is disclosed. The fastening element may, for example, be configured for fastening the fuel rail to a cylinder head of the engine, the engine being in particular an internal combustion engine. The fastening assembly comprises a bracket which includes a longitudinal axis. The fastening assembly further comprises a retainer and a bolt. The retainer comprises a first through opening for receiving the bolt. The first through opening in particular extends through the retainer in longitudinal direction. The bolt is inserted through the first through opening. The main extension direction of the bolt is preferably parallel or coaxial to the longitudinal axis.

The retainer is operable to hold the bolt in a given longitudinal position through friction between the bolt and the retainer. The retainer is preferably made from an elastic material or elastic materials which are able to grip the bolt. In this way, the bolt is securely held in position during delivery and assembly of the fuel rail in the engine.

The bracket is coupled to the fuel rail. In a preferred embodiment, the bracket is coupled to the fuel rail via an injector cup. The injector cup and bracket are preferably formed as one piece.

The bracket comprises a second through opening for receiving the retainer and the bolt. The second through opening extends in particular through the bracket in longitudinal direction. For example, the longitudinal axis is defined by a central axis through the second through opening.

The retainer is arranged in the second through opening such that it can rotate relative to the bracket. The retainer and the bracket preferably share the longitudinal axis as central axes of the first and second through holes, respectively. The second through opening preferably exhibits a circular cross-section perpendicular to the longitudinal axis and the exterior shape of the retainer is preferably cylindrical. In this way, rotation of the retainer about its own central axis is facilitated.

The cross-section of the first through opening perpendicular to the longitudinal axis has an elongated shape. An elongated shape includes a long hole, a long slot and an oval hole. The elongated shape allows the inserted bolt to move in both directions of the elongation. This means that the bolt can be moved into an excentric position - i.e. a position spaced from the longitudinal axis - relative to the retainer and bracket. This in combination with the feature that the retainer can rotate relative to the bracket, allows the bolt (when in a excentric position) to be moved along the circumference of a imaginary circle centred around the longitudinal axis. The radius of the imaginary circle is dependent on the lateral deviation of the bolt along the elongated first through opening from the longitudinal axis. In this way, the fastening assembly according to the invention offers lateral and radial tolerance for positioning the fuel rail (and injectors) into the dedicated position in the engine.

In a preferred embodiment, the cross-section of the first through opening perpendicular to the longitudinal axis has an elongated circular or an oval shape. An elongated circular shape is in particular a contour which has circle sections at opposing ends, the circle sections being connected to one another by intermediate sections which are straight or which are bent more weakly than the circle sections. The circle sections are preferably half circles. The elongated circular shape may be an ellipse in one development. If the cross-section of the first through opening were not elongated, but for instance circular, the retainer would be able to secure the vertical position of the bolt, but would not be able to offer lateral or radial tolerance during assembly.

In an advantageous embodiment of the invention, the bolt comprises a bolt dog end which is opposite to the head of the bolt and where no threading is present, whereby the bolt is inserted through the first through opening such that the bolt dog end protrudes beyond the bracket. In one development, only the bold dog end protrudes beyond the bracket on a side of the bracket opposite the bolt head.

Having only the bolt dog end protruding beyond the second through opening of the bracket is advantageous, because this corresponds to the ideal starting position of the bolt for assembly. In this way, the engine is also protected from the sharp threading of the bolt. Otherwise, it can bee foreseen that in practice a part of the threading of the bolt may protrude beyond the bracket.

In a further embodiment of the invention, the negative shape of the second through opening corresponds approximately to the positive shape of the exterior of the retainer. This mating form ensures that the retainer does not slip out of the second through opening of the bracket and prevents loss of the bolt and retainer.

In a further advantageous embodiment, the surface of the retainer facing the bracket has a circumferential tongue. The surface facing the bracket is in particular an outer circumferential surface of the retainer and may expediently face away from the longitudinal axis. The tongue includes a rib or ridge on the surface of the retainer facing the bracket. The circumferential tongue can be continuous or discontinuous (e.g. segmented). In the continuous form, the circumferential tongue resembles a ring around the retainer. The circumferential tongue of the retainer creates additional friction to maintain the position of the bolt and retainer relative to the bracket.

In a further embodiment of the invention, the circumferential tongue of the retainer can engage with a corresponding circumferential groove on the surface of the bracket facing the retainer. The surface of the bracket facing the retainer is in particular a circumferential surface of the second through hole.

In a preferred embodiment, the surface of the retainer facing the bracket has a circumferential groove which can engage with a corresponding circumferential tongue on the surface of the bracket facing the retainer. A circumferential groove in the retainer or bracket can be continuous or discontinuous (e.g. segmented) as can a circumferential tongue in the retainer or bracket.

The injector can be mounted either by the suspended or clamped method.

Three exemplary embodiments of the invention are explained in the following with the aid of schematic drawings. These are as follows:
- Figure 1: a perspective view of a first embodiment of the invention,
- Figure 2: a perspective view of a retainer according to the first embodiment of the invention,
- Figure 3: a cross-sectional view of the first embodiment in the plane A-A,
- Figure 4: a cross-sectional view of the first embodiment in the plane B-B,
- Figure 5: a cross-sectional view of a section of a second embodiment of the invention and
- Figure 6: a cross-sectional view of a section of a third embodiment of the invention.

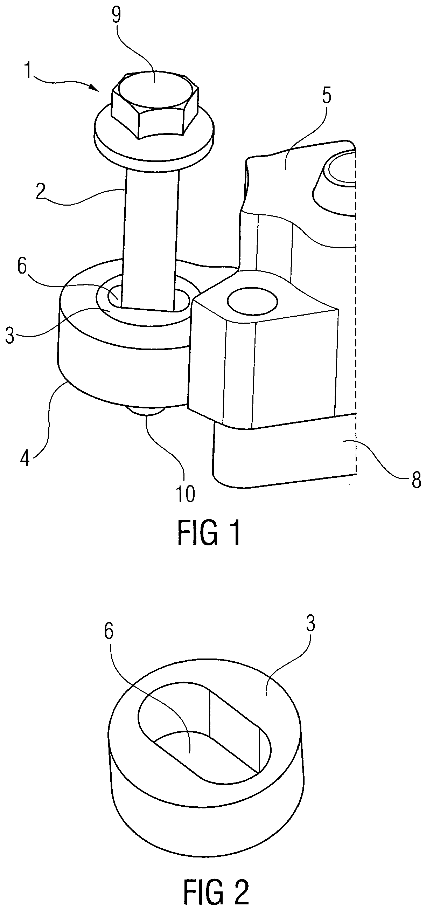

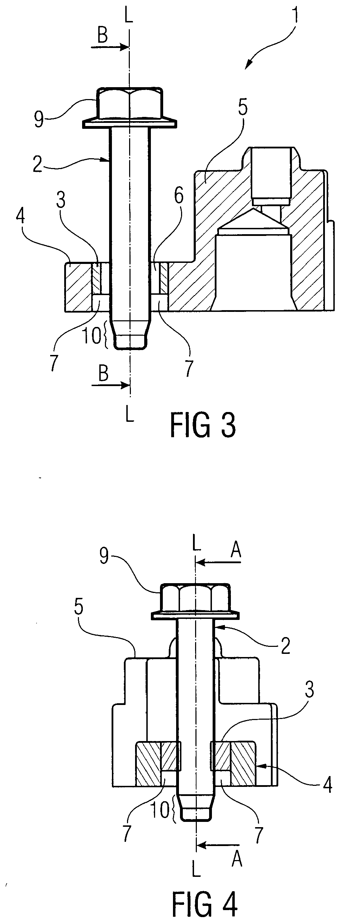

Figure 1 shows a section of a fastening assembly 1 including a bolt 2, a retainer 3 and a bracket 4 which is coupled to an injector cup 5 (partially shown in figure 1). The retainer 3 includes a first through opening 6 through which the bolt 2 is inserted. The bracket 4 comprises a second through opening 7 in which the retainer 3 is movably arranged. The second through opening 7 is circular in cross-section perpendicular to a central longitudinal axis L (see figures 3 and 4). A connection plate 8 for the mounting of an injector is shown in figure 1.

A perspective view of the retainer 3 is shown alone in figure 2. The first through opening 6 has a elongated circular cross-section (i.e. an elongated hole). The through opening 6 extends completely through the retainer 3 in longitudinal direction L. The exterior form of the retainer 3 is cylindrical with the cylinder axis in particular coinciding with the longitudinal axis L.

Figures 3 and 4 show two different cross-sections of the fastening assembly 1 pictured in figure 1. An injector is not featured in these diagrams. The bolt 2 is pictured in a central position within the first through opening 6. The end of the bolt 2 opposite to the bolt head 9 is tapered and does not include any threading. This end is the bolt dog end 10.

The lateral tolerance available during assembly is visible in figure 3, i.e. the clearance between the retainer 3 and the bolt 2 (the first through opening 6). It can been seen from the cross-section in figure 4 that in this plane the bolt 2 is tightly held by the retainer 3. In other words, the bolt 2 is spaced apart from the retainer 3 within the first through opening 6 in a first lateral direction and contacts the retainer 3 within the first through opening 6 in a second lateral direction, different from the first lateral direction. The retainer 3 is made from an elastic material which partially grips around the bolt 2. In figure 4 the retainer 3 extends partially into the bolt 2 due to its elasticity.

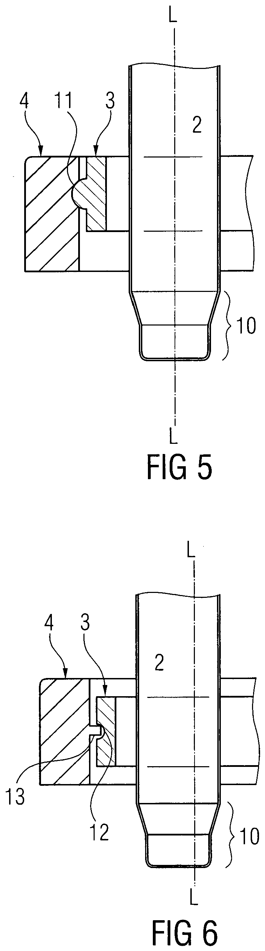

Figure 5 shows a second exemplary embodiment of the invention which in general corresponds to the first embodiment described above. However, in the present embodiment, the retainer 3 of the present embodiment includes a circumferential tongue (or ridge) 11 on the surface facing the bracket 4. This tongue 11 is continuous and integrated in the retainer 3 and is therefore also made of elastic material. The tongue 11 can therefore be elastically deformed to prevent the retainer 3 from slipping out of the second through opening 7 in the vertical direction. The retainer 3 is still able to rotate relative to the bracket 4 around the central longitudinal axis L. In one development, the bracket 4 may comprise a circumferential groove (not shown in the figures) in the surface of the second through opening 7 corresponding to the tongue 11.

Figure 6 shows an alternative to the example in figure 5 as the third exemplary embodiment of the invention. The retainer 3 includes a circumferential groove 12 and the bracket 4 includes a circumferential tongue 13. The groove 12 and tongue 13 interact to secure the vertical position of the retainer 3 in the second through opening 7 of the bracket 4. The retainer 3 is still able to rotate relative to the bracket 4 around the central longitudinal axis L. The bolt 2 in this example is located off-centre to the central longitudinal axis L. The bolt 2 is therefore able to be adjusted radially, i.e. moved long the circumference of an imaginary circle.

## Claims

1. Fastening assembly (1) for mounting a fuel rail in an engine comprising
- a bracket (4) which includes a longitudinal axis (L) and is coupled to the fuel rail,
- a retainer (3) which comprises a first through opening (6) for receiving a bolt (2), and
- a bolt (2) which is inserted through the first through opening (6),
wherein
- the bracket (4) comprises a second through opening (7) for receiving the retainer (3) and the bolt (2),
- the retainer (3) is arranged in the second through opening (7) such that it can rotate relative to the bracket (4)
- the retainer (3) is operable to hold the bolt (2) in a position along the longitudinal axis (L) through friction between the bolt (2) and the retainer (3),
- the retainer (3) is maintained relative to the bracket (4) by means of friction, and
- the cross-section of the first through opening (6) perpendicular to the longitudinal axis (L) has an elongated shape.

2. Fastening assembly (1) according to claim 1, wherein the bolt (2) comprises a bolt dog end (10) which is opposite to the head of the bolt (2) and where no threading is present, whereby the bolt (2) is inserted through the first through opening (6) such that the bolt dog end (10) protrudes beyond the bracket (4).

3. Fastening assembly (1) according to claim 1 or 2,
wherein
the bracket (4) is coupled to the fuel rail via an injector cup (5).

4. Fastening assembly (1) according to claim 3, wherein the bracket (4) and injector cup (5) are formed as one piece.

5. Fastening assembly (1) according to one of the preceding claims, wherein
the second through opening (7) has a circular cross-section perpendicular to the longitudinal axis (L) and the exterior shape of the retainer (3) is cylindrical.

6. Fastening assembly (1) according to one of the preceding claims, wherein
the negative shape of the second through opening (7) corresponds approximately to the positive shape of the exterior of the retainer (3).

7. Fastening assembly (1) according to one of the preceding claims, wherein
the cross-section of the first through opening (6) perpendicular to the longitudinal axis (L) has an elongated circular or an oval shape.

8. Fastening assembly (1) according to one of the preceding claims, wherein
the surface of the retainer (3) facing the bracket (4) has a circumferential tongue.

9. Fastening assembly (1) according to claim 8, wherein the tongue can engage with a corresponding circumferential groove on the surface of the bracket (4) facing the retainer (3).

10. Fastening assembly (1) according to one of the claims 1 to 7, wherein
the surface of the retainer (3) facing the bracket (4) has a circumferential groove which can engage with a corresponding circumferential tongue on the surface of the bracket (4) facing the retainer (3).

## Patentansprüche

1. Befestigungsanordnung (1) zur Montage einer Kraftstoffleiste in einem Motor, umfassend:
- einen Bügel (4), der eine Längsachse (L) aufweist und mit der Kraftstoffleiste gekoppelt ist,
- eine Halterung (3), die eine erste Durchgangsöffnung (6) zum Aufnehmen eines Bolzens (2) aufweist, und
- einen Bolzen (2), der durch die erste Durchgangsöffnung (6) eingeführt wird,
wobei
- der Bügel (4) eine zweite Durchgangsöffnung (7) zum Aufnehmen der Halterung (3) und des Bolzens (2) umfasst,
- die Halterung (3) in der zweiten Durchgangsöffnung (7) angeordnet ist, so dass sie in Bezug auf den Bügel (4) drehen kann,
- die Halterung (3) zum Halten des Bolzens (2) in einer Position entlang der Längsachse (L) durch Reibung zwischen dem Bolzen (2) und der Halterung (3) betrieben werden kann,
- die Halterung (3) in Bezug auf den Bügel (4) mittels Reibung gehalten wird, und
- der Querschnitt der ersten Durchgangsöffnung (6) senkrecht zur Längsachse (L) eine längliche Form aufweist.

2. Befestigungsanordnung (1) nach Anspruch 1, wobei der Bolzen (2) einen Bolzenrest (10) umfasst, der gegenüber des Kopfes des Bolzens (2) angeordnet ist und an dem kein Gewinde vorhanden ist, wodurch der Bolzen (2) durch die erste Durchgangsöffnung (6) eingeführt wird, so dass der Bolzenrest (10) über den Bügel (4) hinaus vorsteht.

3. Befestigungsanordnung (1) nach Anspruch 1 oder 2, wobei der Bügel (4) über eine Einspritzventil-Kappe (5) mit der Kraftstoffleiste gekoppelt ist.

4. Befestigungsanordnung (1) nach Anspruch 3, wobei der Bügel (4) und die Einspritzventil-Kappe (5) als ein Stück ausgebildet sind.

5. Befestigungsanordnung (1) nach einem der vorhergehenden Ansprüche, wobei die zweite Durchgangsöffnung (7) einen kreisförmigen Querschnitt senkrecht zur Längsachse (L) aufweist und die Außenform der Halterung (3) zylindrisch ist.

6. Befestigungsanordnung (1) nach einem der vorhergehenden Ansprüche, wobei die Negativform der zweiten Durchgangsöffnung (7) in etwa der Positivform der Außenseite der Halterung (3) entspricht.

7. Befestigungsanordnung (1) nach einem der vorhergehenden Ansprüche, wobei der Querschnitt der ersten Durchgangsöffnung (6) senkrecht zur Längsachse (L) eine längliche kreisförmige oder ovale Form aufweist.

8. Befestigungsanordnung (1) nach einem der vorhergehenden Ansprüche, wobei die Oberfläche der Halterung (3), die zum Bügel (4) weist, eine umlaufende Zunge aufweist.

9. Befestigungsanordnung (1) nach Anspruch 8, wobei die Zunge in eine entsprechende umlaufende Nut auf der Oberfläche des Bügels (4), die zur Halterung (3) weist, eingreifen kann.

10. Befestigungsanordnung (1) nach einem der Ansprüche 1 bis 7, wobei die Oberfläche der Halterung (3), die zum Bügel (4) weist, eine umlaufende Nut aufweist, die in eine entsprechende umlaufende Zunge auf der Oberfläche des Bügels (4), die zur Halterung (3) weist, eingreifen kann.

## Revendications

1. Ensemble de fixation (1) servant au montage d'une rampe de distribution de carburant dans un moteur comprenant
- un support (4) qui comprend un axe longitudinal (L) et est accouplé à la rampe de distribution de carburant,
- un organe de retenue (3) qui comprend une première ouverture traversante (6) destinée à recevoir un boulon (2), et
- un boulon (2) qui est inséré à travers la première ouverture traversante (6),
dans lequel
- le support (4) comprend une seconde ouverture traversante (7) destinée à recevoir l'organe de retenue (3) et le boulon (2),
- l'organe de retenue (3) est disposé dans la seconde ouverture traversante (7) de telle sorte qu'il puisse tourner par rapport au support (4)
- l'organe de retenue (3) peut être mis en oeuvre pour maintenir le boulon (2) dans une position le long de l'axe longitudinal (L) par frottement entre le boulon (2) et l'organe de retenue (3),
- l'organe de retenue (3) est maintenu par rapport au support (4) par frottement, et
- la section transversale de la première ouverture traversante (6) perpendiculaire à l'axe longitudinal (L) présente une forme allongée.

2. Ensemble de fixation (1) selon la revendication 1, dans lequel
le boulon (2) comprend un téton de boulon (10) qui est à l'opposé de la tête du boulon (2) et sur lequel aucun filetage n'est présent, le boulon (2) étant inséré à travers la première ouverture traversante (6) de telle sorte que le téton de boulon (10) fasse saillie au-delà du support (4).

3. Ensemble de fixation (1) selon la revendication 1 ou 2, dans lequel
le support (4) est accouplé à la rampe de distribution de carburant par le biais d'un réceptacle d'injecteur (5).

4. Ensemble de fixation (1) selon la revendication 3, dans lequel
le support (4) et le réceptacle d'injecteur (5) sont formés d'un seul tenant.

5. Ensemble de fixation (1) selon l'une des revendications précédentes, dans lequel
la seconde ouverture traversante (7) présente une section transversale perpendiculaire à l'axe longitudinal (L) circulaire et la forme extérieure de l'organe de retenue (3) est cylindrique.

6. Ensemble de fixation (1) selon l'une des revendications précédentes, dans lequel
la forme négative de la seconde ouverture traversante (7) correspond approximativement à la forme positive de l'extérieur de l'organe de retenue (3).

7. Ensemble de fixation (1) selon l'une des revendications précédentes, dans lequel
la section transversale de la première ouverture traversante (6) perpendiculaire à l'axe longitudinal (L) présente une forme circulaire allongée ou une forme ovale.

8. Ensemble de fixation (1) selon l'une des revendications précédentes, dans lequel
la surface de l'organe de retenue (3) faisant face au support (4) comporte une protubérance circonférentielle.

9. Ensemble de fixation (1) selon la revendication 8, dans lequel la protubérance peut venir en prise avec une rainure circonférentielle correspondante sur la surface du support (4) faisant face à l'organe de retenue (3).

10. Ensemble de fixation (1) selon l'une des revendications 1 à 7, dans lequel
la surface de l'organe de retenue (3) faisant face au support (4) comporte une rainure circonférentielle qui peut venir en prise avec une protubérance circonférentielle correspondante sur la surface du support (4) faisant face à l'organe de retenue (3).
